Europäisches Patentamt

European Patent Office

Office européen des brevets

(11) Numéro de publication: **0 042 349 B1**

## (12) FASCICULE DE BREVET EUROPEEN

(45) Date de publication du fascicule du brevet: **05.12.84**

(51) Int. Cl.³: **C 04 B 13/14, B 28 B 11/00**

(21) Numéro de dépôt: **81400977.5**

(22) Date de dépôt: **18.06.81**

(54) **Procédé et dispositif d'élimination de l'eau excédentaire d'un mélange de plâtre et d'eau et produits obtenus.**

(30) Priorité: **18.06.80 FR 8013497**

(43) Date de publication de la demande:
**23.12.81 Bulletin 81/51**

(45) Mention de la délivrance du brevet:
**05.12.84 Bulletin 84/49**

(84) Etats contractants désignés:
**AT BE CH DE FR GB IT LI LU NL SE**

(56) Documents cités:
**DE-A-1 771 866**
**DE-B-1 104 419**
**FR-A- 448 255**
**FR-A-2 177 308**

(73) Titulaire: **ISOVER SAINT-GOBAIN**
**63 rue de Villiers**
**F-92209 Neuilly-sur-Seine (FR)**

(72) Inventeur: **Delcoigne, Adrien**
**25 avenue Marie Amélie**
**F-60500 Chantilly (FR)**
Inventeur: **Lanneau, Jacques**
**24 Résidence "Belle Fontaine"**
**F-60600 Breuil-le-Vert (FR)**

(74) Mandataire: **Eudes, Marcel et al**
**Saint-Gobain Recherche 39 Quai Lucien Lefranc**
**F-93304 Aubervilliers Cedex (FR)**

EP 0 042 349 B1

Courier Press, Leamington Spa, England.

# Description

La présente invention se rapporte à l'industrie du plâtre et plus précisément à l'élimination de l'eau excédentaire dans un objet tel une plaque, contenant du sulfate de calcium hydratable et de l'eau, au cours de la fabrication dudit objet. Nous parlerons par la suite plus spécialement d'un objet en forme de plaque, mais l'invention s'applique également à des objets en plâtre, à base de plâtre ou contenant du plâtre, ayant d'autres formes.

Pour fabriquer un objet en plâtre, on mélange avec de l'eau du sulfate de calcium ($CaSO_4$) hydratable, on forme l'objet, le sulfate de calcium s'hydrate, se transforme en hydrate double et simultanément cristallise. Pour pouvoir former l'objet, une quantité d'eau supérieure à la quantité strictement nécessaire à l'hydratation du $CaSO_4$ est souvent employée, et il faut, après le formage, éliminer cette eau excédentaire.

Il est connu de retirer la majeure partie de cette eau avant le début de la prise par un procédé mécanique de type écoulement libre, pressage, puis d'attendre un certain temps pour que se développe la prise du plâtre et que soit employée l'eau d'hydratation, après quoi on soumet l'objet en plâtre à un "séchage thermique" de quelques heures dans un "séchoir thermique" pour éliminer toute l'eau libre restante.

Classiquement, l'air auquel sont soumis les objets en plâtre dans les séchoirs pendant le séchage thermique est à une température constante, faible, de préférence inférieure à 70°C ou une température initialement plus élevée (150°C) mais qu'on fait décroître par paliers de façon à ce que le plâtre reste en dessous de la température qui détériorerait l'hydrate double formé.

Dans ces conditions, le temps de séchage est long, plusieurs heures, voire plusieurs jours, du fait d'une part que la température est faible et du fait d'autre part que l'eau excédentaire enfermée dans le maillage des cristaux du $CaSO_4$, $2 H_2O$ est difficile à extraire. Il s'ensuit donc des installations importantes et coûteuses.

En outre, la détermination du temps optimum de séchage ou de la température correcte de séchage dans chaque palier est un point délicat car on risque de détériorer le plâtre. La chaleur agit en surface du produit qu'on sèche et il faut ajuster la température de façon à ce qu'il y ait en permanence de l'eau en surface, à éliminer. En début de séchage, il y a effectivement de l'eau en surface, mais ensuite c'est l'eau du coeur du produit qui doit avoir le temps de migrer jusqu'à la surface sous peine de voir la portion superficielle de plâtre se dégrader. La vitesse d'élimination de l'eau est plus importante sur les bords des plaques qu'ailleurs, d'où, pour éviter la dégradation du plâtre sur les bords, la nécessité de les protéger par un écran par exemple, ou de diminuer le chauffage ou le débit d'air chaud les atteignant.

La présente invention vise à remédier à tous ces inconvénients, à savoir long temps de séchage, temps et température de séchage impérativement correctement fixés, installations de séchage importantes, coûteuses et compliquées. Pour cela, elle propose de soumettre les objets à base de plâtre à un séchage thermique à un moment où une proportion importante de l'eau destinée à la réhydratation est encore disponible sous forme non combinée.

Le maillage des cristaux $CaSO_4$, $2H_2O$, n'est pas encore constitué et n'emprisonne pas l'eau qui peut ainsi être facilement et rapidement extraite, d'autant mieux extraite qu'elle est en grande quantité puisqu'il y a dans le produit qu'on sèche, non seulement de l'eau excédentaire, mais aussi de l'eau de réhydratation non encore utilisée.

Dans ces conditions, on peut, sans détériorer le produit, mettre en oeuvre un séchage thermique à haute efficacité qu'on arrête ayant élimination complète de l'eau disponible dans le produit de façon à laisser au moins l'eau nécessaire à la totale hydratation du plâtre. On arrête le séchage thermique quant il ne reste dans le produit, en plus de l'eau nécessaire à l'hydratation, qu'un maximum de 5% d'eau excédentaire et généralement, seulement 1%.

On peut choisir de sécher avec un air de séchage à température élevée et avec un fort coefficient d'échange entre le plâtre et cet air de séchage. On choisira avantageusement des températures supérieures à 150°C et généralement de l'ordre de 200°C.

Avantageusement, pour raccourcir la durée du séchage thermique, on pratiquera préalablement une extraction d'eau par un moyen mécanique du type à dépression ou compression, juste après le formage. Ainsi, on pourra effectuer une filtration; celle-ci pourra être conduite jusqu'à atteindre un volume global du produit en plâtre correspondant à celui obtenu par un empilement des grains de plâtre.

Avantageusement encore, on poursuivra la filtration par un essorage.

Chacune de ces deux opérations préalables, d'une part élimine l'eau, d'autre part agit sur la cinétique d'hydratation du gypse soit en accélérant le début de la réaction, soit au contraire en ralentissant la fin de la réaction. Ainsi, toute eau déjà éliminée au cours de ce traitement préalable n'aura plus besoin de l'être au cours de séchage thermique, on pourra disposer plus rapidement d'un produit contenant suffisamment de phase hydratée pour être manipulable et transférable dans l'étuve de séchage thermique, on favorisera l'extraction d'eau par séchage thermique en ralentissant la formation de cristaux susceptibles de gêner sa migration vers la surface du produit en laissant subsister dans le produit une quantité d'eau d'hydratation plus importante, on arrêtera le séchage thermique plus tôt en abandonnant dans le produit suffisamment d'eau pour terminer l'hydratation qu'on a ralentie.

A la place de la filtration ou de la filtration et de l'essorage, ou en combinaison avec l'une ou l'autre de ces actions, on pourra réduire la durée des opérations après le formage, agir sur la cinétique d'hydratation du gypse à l'aide d'adjuvants, par exemple en ajoutant des cristaux de gypse qui accélèreront le début de la cristallisation.

L'objet qui sort du séchage thermique est alors en un plâtre dont la prise n'est pas terminée, mais qui contient l'eau nécessaire à sa poursuite et une quantité de l'ordre de 1% d'eau résiduelle. En outre, du fait du traitement préalable du type dépression ou compression, le produit est densifié, ses caractéristiques, notamment caractéristiques mécaniques et tenue à l'eau s'en trouvent améliorées.

L'invention propose également un dispositif pour mettre en oeuvre le procédé d'élimination d'eau excédentaire.

Elle sera maintenant décrite en détail en référence aux dessins qui représentent:

— figure 1: un schéma d'une installation de fabrication de plaques de plâtre;
— figure 2: un filtre industriel,
— figure 3: un séchoir,
— figure 4: un diagramme de Mollier-Ramzine,
— figure 5: des courbes de bilan enthalpique de l'opération de séchage,
— figure 6: le diagramme de stabilité des hydrates $CaSO_4$, $xH_2O$ en présence d'air humide.

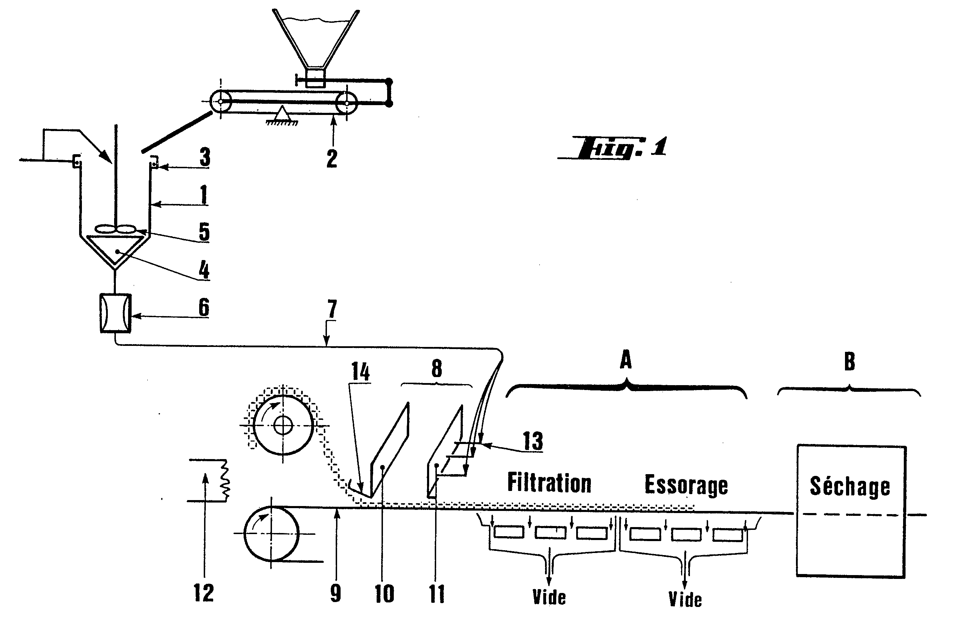

La figure 1 montre un schéma d'une installation destinée à fabriquer des objets en plâtre, ces objets étant par exemple des plaques pour la construction. Un premier poste est le poste de mélange d'un seul ou de plusieurs sulfates de calcium hydratables ($CaSO_4$ et $CaSO_4$, $\frac{1}{2}H_2O$) avec de l'eau et éventuellement des charges et/ou des éléments de renfort, des adjuvants qui peuvent modifier le procédé tels des accélérateurs, des retardateurs, des tensio-actifs, des fluidifiants, ou qui peuvent modifier le produit final tels que des résines, de la mousse, etc... Un tel poste de mélange a été décrit en détail dans les publications de brevets française n° 2 417 134 et 2 416 717; il s'agit d'une cuve de mélange 1, cylindrique, alimentée en plâtre pulvérulent et en additifs solides par un tapis balance à poids constant 2 et en eau et additifs liquides par un déversoir annulaire recouvert 3 qui déborde sur la paroi latérale de la cuve 1. Cette cuve 1 possède un fond intermédiaire 4 ajouré à sa périphérie pour laisser s'écouler le mélange, ce fond intermédiaire étant constitué par la partie supérieure d'un noyau, par exemple en forme de cône disposé base plane en haut, dans un prolongement convergent, lui-même conique, du bas de la cuve 1. Dans la partie supérieure de la cuve de mélange, à proximité immédiate du fond intermédiaire, tourne une turbine défloculeuse 5. Le débit de sortie de la cuve de mélange est réglé par une vanne pneumatique à manchon élastique souple 6, de façon à maintenir constante la quantité de produits dans ladite cuve ainsi que le temps de mélange. Ce manchon élastique est en outre maintenu constamment en mouvement pour éviter la formation de dépôts. Le mélange est acheminé par des tuyaux 7 vers un deuxième poste qui est la poste de formage des plaques. Un tel poste est décrit en détail dans la publication de brevet français n° 2 416 777. Il s'agit d'un auget sans fond 8, posé sur une sole de coulée mobile 9 et formé de deux plaques 10 et 11 constituant les parois amont et aval, ainsi que deux bandes latérales 12 mobiles à la même vitesse que la sole de coulée 9 et qui prennent appui sur les bords des plaques amont et aval. Une fente de coulée est ménagée sous la plaque aval 11; du mélange de plâtre et d'eau est introduit dans l'auget par des tubes 13 débouchant au travers de la plaque aval 11 et délivrant des jets immergés dans la masse du mélange se trouvant initialement dans l'auget 8.

Comme montré sur la figure 1, le poste de fabrication d'un ruban ou de plaques de plâtre peut comprendre des moyens 14 d'introduction de renfort, par exemple de la fibre de verre délivrée en rouleaux de tissu, de mat, de nappes de fils continus enchevêtrés, de grilles de verre ou sous d'autres formes.

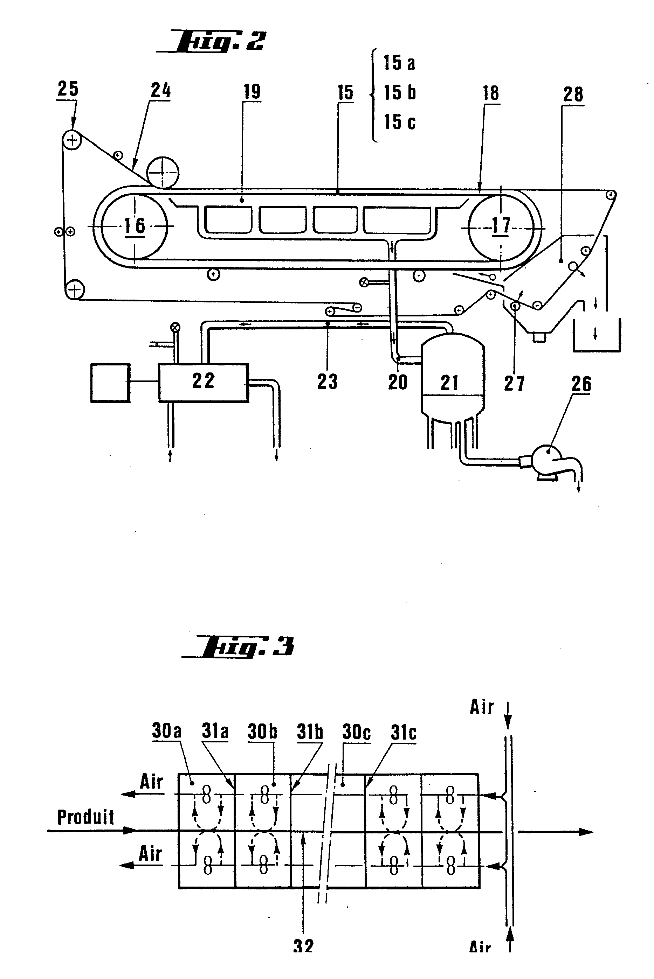

Le poste suivant est celui où on élimine l'eau excédentaire contenue dans le mélange, c'est-à-dire celle qui n'intervient pas dans l'hydratation en $CaSO_4$, $2H_2O$. Selon l'invention, ce dernier poste comporte des moyens mécaniques A et des moyens thermiques B. Les moyens mécaniques A sont disposés immédiatement après le poste de formage. Ils sont par exemple constitués par un filtre industriel montré en détail figure 2, sur lequel on effectuera les opérations d'élimination de l'eau par succion. Il s'agit d'un filtre à bande ayant une surface de filtration continue constituée par une bande 15 sans fin, munie de trous d'évacuation, tendue entre deux tambours tournants 16 et 17, dont la nappe supérieure 18 glisse sur au moins un caisson d'aspiration 19 en communication par une ou plusieurs tuyauteries avec au moins une chambre d'évacuation 21, elle-même reliée à une station à vide 22 par une canalisation 23. La bande sans fin 15 est formée d'un ensemble de couches superposées 15a, 15b, 15c..., en tissu ou en caoutchouc, percées de trous, avec des nervures transversales sur la couche supérieure 15a, l'ensemble définissant un profil en forme d'auge. Ladite bande 15 est recouverte d'un support filtrant 24 sans fin, par exemple en tissu reposant sur les nervures, se déplaçant à la même vitesse que la bande 15 et tournant sur des rouleaux de guidage et d'entraînement tels que 25.

Sur la chambre d'évacuation est branchée une pompe 26 qui évacue l'eau extraite des plaques ou du ruban de plâtre en cours de fabrication; des bouches d'arrosage 27 sont prévues pour nettoyer la bande sans fin et le support filtrant pendant leur trajet de retour. Ces bouches d'arrosage 27 sont à l'intérieur d'une chambre de récupération 28 traversée par le support filtrant et certaines sont également dirigées sur la bande 15 pendant son trajet de retour, la chambre 28 récupérant les eaux de lavage.

Le caisson d'aspiration 19 commence à une distance telle de la plaque aval 11 de l'auget 8 de coulée du mélange d'eau et de plâtre que la coulée ne soit pas perturbée par l'aspiration. Ainsi, une distance de 10 à 20 cm lorsque la dépression est de l'ordre de 100 mm de Hg (13322 Pa) est tout à fait suffisante.

Dans l'exemple de réalisation décrit, le filtre industriel A mesure 3 mètres environ; il possède deux caissons d'aspiration 19, séparés, reliés chacun à leurs propres moyens de production du vide, et il permet d'effectuer d'abord l'opération de filtration c'est-à-dire l'extraction d'eau jusqu'à amener les grains de plâtre à se toucher, ensuite l'opération d'essorage qui consiste à vider l'espace intergranulaire de son eau.

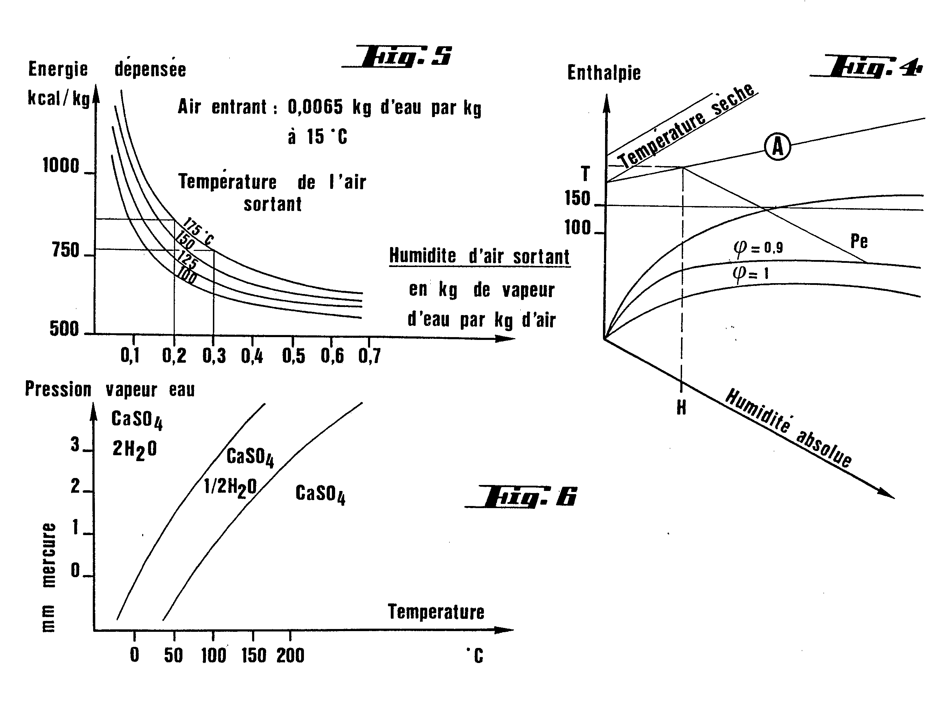

Dans la réalisation décrite, le filtre est immédiatement suivi des moyens de séchage thermique B, en l'occurrence un séchoir industriel continu montré figure 3. Ce séchoir comprend une pluralité de cellules 30a, 30b, 30c... séparées par des cloisons ouvrantes 31a, 31b, 31c...; un tapis convoyeur 32 traverse les différentes cellules d'amont en aval. Chaque cellule possède ses propres moyens de chauffage qui peuvent être des brûleurs à gaz par exemple. Dans chaque cellule, l'échange calorifique entre le séchoir et le produit est obtenu à l'aide de deux courants d'air, l'un au dessus, l'autre au dessous du produit, à grand débit, tournant en rond et débouchant sur les plaques de produit, en impact, à vitesse élevée. La température de cet air est régulée. D'autre part, un courant d'air à débit beaucoup plus faible que le précédent traverse l'ensemble des cellules d'aval en amont, donc à contre-sens de l'avancement des plaques fabriquées. La valeur de ce débit est ajustée par la régulation de l'humidité de l'air sortant du séchoir. Dans un tel séchoir à haute performance, il est connu que pour obtenir les conditions de séchage choisies, il suffit de réguler d'une part la température sèche de l'air entrant dans chaque cellule en agissant sur les moyens de chauffage et de réguler d'autre part l'humidité de l'air sortant, pour contrôler le débit d'air traversant le séchoir.

Dans d'autres mises en oeuvre, le filtre A peut être plus court, 1 m environ, et/ou une certaine longueur de convoyeur peut être ménagée entre le filtre A et le séchoir thermique B.

Ce dispositif de fabrication de plaques de plâtre travaille de la façon suivante. On choisit un rapport de mélange pondéral eau/plâtre, $Eo/Po$, $Eo$ et $Po$ étant respectivement le débit massique d'eau et le débit massique du plâtre. Ce rapport $Eo/Po$ est choisi de préférence élevé et de l'ordre de 0,80 à 0,90 pour permettre un formage facile et rapide.

Le dispositif de mélange tel que décrit dans la demande française déjà citée, publiée sous le n° 2 416 717, permet un mélange rapide, en un temps pouvant être aussi faible que 3 secondes et qui est généralement de l'ordre de 20 secondes.

Il délivre un mélange liquide de fluidité constante au bout d'un temps de l'ordre de 20 secondes, compté après la mise en contact de l'eau et du plâtre. Comme indiqué dans la demande publiée sous le n° 2 416 777, ce mélange est transporté dans des tuyaux 7 jusqu'au dispositif de coulée 8. Du fait de la grande fluidité, le transport se fait rapidement. Puis le mélange distribué dans l'auget 8 est coulé sur une sole de coulée qui défile de façon continue. On obtient ainsi un ruban de produit en plâtre dont la qualité est homogène dans toute section transversale, perpendiculairement à la direction de défilement de la sole de coulée et identique d'une section à l'autre pour un réglage donné de l'ensemble de l'installation. Eventuellement un renfort est mis en place.

Alors que pour toute cette première phase de la fabrication il est avantageux d'avoir beaucoup d'eau pour bien mouiller le plâtre rapidement, pour bien mélanger, pour transporter le mélange dans des tuyaux, pour couler facilement et rapidement, pour faciliter la mise en place du renfort, pour n'avoir à mettre en oeuvre qu'un matériel léger, au contraire ensuite dès que la coulée est faite, la présence d'un excès d'eau est un inconvénient. En effet, plus il y a d'eau, plus la période d'induction du plâtre précédant le début de la prise sera longue, plus la prise elle-même sera longue, plus l'énergie à mettre en oeuvre pour éliminer cette eau excédentaire sera importante, plus le temps de séchage sera long, plus le matériel à mettre en oeuvre sera important et coûteux, plus la résistance mécanique des produits obtenus sera faible.

Immédiatement après formage, le ruban de mélange coulé arrive sur le filtre industriel A. Le caisson d'aspiration 19 ne commence qu'à une distance de 10 à 20 cm de la plaque aval 11 de l'auget 8 pour éviter que la coulée ne soit perturbée par la dépression appliquée. La dépression est aussi élevée qu'il est possible sans entraîner de fissuration. Elle est fonction de la qualité du plâtre employé, de l'épaisseur du ruban de plâtre, de la nature et de la quantité des renforts présents. Pendant cette phase, la teneur en eau diminue rapidement et tend asymptotiquement vers une teneur de l'ordre de grandeur de celle du gâchage à saturation.

L'homogénéité de qualité du plâtre dans toute section transversale du ruban de produit est conservée. L'eau s'éliminant, le produit se densifie, l'épaisseur du ruban diminue, la liaison entre éléments de renfort et plâtre devient plus intime et les grains de plâtre se rapprochent jusqu'à se toucher. Toute eau éliminée par filtration n'aura plus besoin de l'être par séchage thermique, ce qui diminue d'autant sa durée. On favorise aussi la formation de cristaux de gypse, ce qui amène une accélération du début de la réaction de prise du plâtre et un léger ralentissement de la fin de ladite réaction. Cela permet d'une part de disposer plus rapidement d'un produit suffisamment hydraté pour être manipulable et transférable dans l'étuve de séchage thermique, cela permettra ensuite, une fois que le produit sera dans l'étuve, de légèrement ralentir l'hydratation, donc de favoriser l'extraction de l'eau et de terminer cette extraction d'eau en excès plus rapidement, en abandonnant dans le produit une quantité d'eau d'hydratation plus importante.

Au cours de cette filtration, l'eau passe au travers du support filtrant 24, est canalisée dans les rigoles à la surface de la couche 15a de caoutchouc limitées par des nervures, puis s'écoule par les trous, alors que les grains de plâtre sont retenus. Pour un ruban de produit d'épaisseur initiale de l'ordre de la dizaine de mm, par exemple 8,5 mm, en un phospho-plâtre ayant des grains d'un diamètre moyen de 25 à 30 $\mu$m, la dépression applicable sans provoquer de fissuration reste inférieure à 150 mm de Hg (19984 Pa), et en pratique elle pourra s'échelonner de 40 à 150 mm de mercure (5329 à 19984 Pa), les temps pour faire descendre la teneur en eau initiale de 0,80 ou 0,90 à la teneur du gâchage à saturation s'échelonnant de 80 secondes à quelques secondes.

Un dépression de 100 mm de Hg (13322 Pa) est classiquement employée, la temps de filtration est alors de 30 secondes et la zone où l'eau disparaît de la surface du ruban de produit se situe à 90 cm en aval de la plaque aval de l'auget de coulée. Le rapport entre l'épaisseur de la plaque ou du ruban après la coulée et son épaisseur après filtration est de l'ordre de 1,35. Toute cette opération est terminée environ dans les 120 à 150 secondes qui suivent la mise en contact du plâtre pulvérulent et de l'eau.

Cette seule opération de filtration peut se faire sur un filtre industriel de 1 mètre de longueur environ. Elle conduit déjà à une réduction de la durée du séchage thermique. Ensuite, le produit peut être acheminé sur un convoyeur jusqu'à l'étuve de séchage thermique. Pendant son trajet, la prise du plâtre se développe, et on détermine la longueur du convoyeur de façon que, à son extrémité, le produit soit suffisamment hydraté pour être manipulable et pour être transportable dans l'étuve.

Préférentiellement, on cherchera à réduire encore la durée du séchage, en prolongeant la filtration par un essorage. L'essorage peut se faire sur la même bande 15 du filtre industriel A que la filtration. Dans ce cas le filtre A a une longueur de l'ordre de 3 m. L'essorage consiste à appliquer une nouvelle dépression pour vider de son eau l'espace situé entre les grains de plâtre. La dépression est produite par un deuxième caisson à vide séparé et indépendant de celui utilisé pour la filtration. Là encore, la dépression appliquée doit rester inférieure à celle qui provoquerait la fissuration. Il est intéressant de poursuivre cette opération d'essorage jusqu'à ce que le produit atteigne un degré d'hydratation qui le rende manipulable et renferme donc de 20 à 50% de phase hydratée selon la nature du plâtre employé.

Pour un ruban de produit allant jusqu'à une épaisseur de l'ordre de 10 mm, en un phospho-plâtre ayant des grains d'un diamètre moyen de 25 à 30 $\mu$m, si l'on veut éviter les fissurations, la dépression d'essorage maximale admissible est de l'ordre de 250 mm de Hg (33306 Pa). L'essorage dure environ 1 minute.

L'eau extraite peut être rejetée à l'extérieur ou, pour éviter toute pollution, recyclée et introduite en même temps que l'eau nouvelle à la station de mélange pour constituer le mélange de plâtre et d'eau.

A ce stade de la filtration et de l'essorage, la réhydratation du $CaSO_4$, ou ce que l'on appelle couramment la prise, a à peine commencé, si bien que le recyclage direct ne modifie pas de façon sensible l'évolution du $CaSO_4$.

Par l'essorage, on stabilise l'édifice acquis par la filtration, on élimine un peu plus d'eau que l'on n'aura plus besoin d'extraire par séchage thermique, on accélère encore le début de la réaction de prise du plâtre et donc on atteint plus rapidement l'instant où le produit est transférable dans l'étuve de séchage thermique; en compensation, on retarde la fin de la réaction de prise du plâtre et donc on soumet au séchage thermique un produit contenant plus d'eau, on laisse cette eau encore plus libre de migrer vers la surface du produit en retardant la formation de cristaux de gypse qui pourraient obstruer les canaux par lesquels elle chemine, on peut interrompre encore plus tôt le sécharge thermique en abandonnant dans le produit une quantité d'eau plus importante, nécessaire pour que se continue jusqu'à son terme cette hydratation.

Grâce à la filtration et à l'essorage, on peut passer d'une teneur en eau de l'ordre de 0,80 à la sortie du poste de formage, à une teneur en eau de l'ordre de 0,45 ou 0,50 à la fin du filtre industriel A, en un temps de l'ordre de 2 minutes.

La filtration et l'essorage peuvent indifféremment être pratiqués sur le dessous et/ou le dessus de la plaque. De la même façon on peut avoir recours, en même temps ou à leur place, à d'autres moyens d'extraction de l'eau comme la compression ou la centrifugation.

Si l'essorage n'est pas conduit jusqu'à ce que le produit soit manipulable, une portion de convoyeur peut être prévue avant l'arrivée au séchoir thermique, pour laisser le temps au produit, pendant son trajet sur cette portion, de s'hydrater jusqu'à l'état désiré. Ce peut être le cas lorsque, le débit d'eau extraite devanant trop faible, de l'ordre de 5 à 10% du débit initial, on interrompt l'essorage avant d'avoir atteint l'état où le produit est manipulable.

A la place des moyens mécaniques d'élimination d'eau par succion, ou en combinaison avec ces moyens, on peut mettre en oeuvre des adjuvants pour moduler les durées des différentes étapes de la prise du plâtre, et ainsi raccourcir le temps de séchage thermique. Ainsi, immédiatement après le formage, on pourra ensemencer le plâtre avec des germes de cristallisation qui accéléreront le début de la réaction de prise du plâtre et qui auront donc à ce titre un effet comparable à celui de la filtration et de l'essorage. Par exemple, dans la mesure où cet autre moyen sera employé en combinaison avec la filtration et éventuellement l'essorage, ces germes pourront provenir du filtrat récupéré qu'on aura dirigé vers un bassin de mûrissement intermédiaire dans lequel on laissera se développer les cristaux de dihydrate ou dans lequel on provoquera leur développement.

Dès que le produit est manipulable, il est tranféré dans le séchoir thermique.

Alors que sous l'angle de la rapidité de fabrication d'une plaque il était intéressant d'abord de couler rapidement en disposant d'un mélange très fluide par adjonction d'une assez grande quantité d'eau, ensuite, dès que le formage était fait, d'éliminer un maximum d'eau pour accélérer l'hydratation du $CaSO_4$, au contraire, dès que le produit est manipulable, il n'y a plus d'intérêt à accélérer l'hydratation, et même on a tout intérêt à ce que l'hydratation ne se développe plus ou tout du moins ne se développe que très lentement. Les traitements préliminaires de filtration et d'essorage d'une part la haute température dans le séchoir d'autre part, vont contribuer à ce ralentissement de l'hydratation. Dans les différents compartiments du séchoir, un courant d'air chaud vient frapper le ruban de produit perpendiculairement à sa surface. L'eau extraite du plâtre est évacuée par le courant d'air traversant qui circule à contre sens.

On soumet au séchage un produit hybride, c'est-à-dire comportant du sulfate de calcium non hydraté de l'eau en grande quantité et un certain pourcentage de phase hydratée, soit en début de séchage un minimum de 20 à 50% selon le plâtre utilisé. Grâce aux traitements préliminaires d'extraction d'eau par succion, on a déjà retiré une certaine quantité d'eau, ce qui permettra d'écourter d'autant la durée du séchage thermique. Par ces mêmes traitements préliminaires, on peut retarder la fin de la réaction d'hydratation, ce qui permet de travailler sur un produit ayant une proportion de phase aqueuse plus importante, donc d'atteindre rapidement le moment où il est possible d'interrompe le chauffage en abandonnant dans le produit une quantité d'eau plus importante, eau nécessaire pour la poursuite de l'hydratation.

Dans ces conditions, c'est un produit contenant une eau avec une très grande liberté que l'on soumet au séchage thermique, donc un produit qui supportera les conditions thermiques les plus sévères sans risques. On pourra donc mettre en oeuvre un séchage à haute efficacité sans avoir à craindre la détérioration du produit. D'ailleurs, on pourra, par un contrôle de taux d'hydratation, vérifier que le produit supporte sans dommage le séchage à haute efficacité. En fait, pour ce séchage thermique, les seules contraintes que l'on devra respecter seront d'abord la nécessité d'éliminer à 5% près toute l'eau excédentaire, ensuite des contraintes économiques.

Tous ces facteurs permettent d'achever le séchage en un temps remarquablement bref. Pour fixer des conditions économiques de fonctionnement du séchoir, plusieurs éléments sont à déterminer: la température (T) de l'air dans le séchoir, l'humidité (H) de l'air sortant du séchoir et le temps de séjour (s) du produit dans le sechoir. On sait qu'à l'entrée il faut que les produits en plâtre soient manipulables et qu'à la sortie ils ne doivent pratiquement plus posséder d'eau excédentaire. En plus de l'eau qui sera nécessaire à l'hydratation, on peut éventuellement en laisser subsister, à la sortie du séchage, un faible pourcentage supplémentaire, inférieur à 5% et préférentiellement de l'ordre de 1%, qui correspond à l'eau que tout plâtre absorbe pour être en équilibre hygrothermique avec l'air environnant. Il est par ailleurs souhaitable que, pendant le séchage thermique, le pourcentage de $CaSO_4$ totalement hydraté ne régresse pas.

Pour déterminer ces trois paramètres T, H, s, on peut utiliser le diagramme de Mollier-Ramzine du plâtre (figure 4) sur lequel on a en particulier tracé l'isohygre (courbe d'humidité constante) 0,9, c'est-à-dire celle qui représente tous les airs qui sont en équilibre avec du plâtre contenant de l'eau liquide ou à la limite de rétention d'eau liquide. Avec un air quelconque A, à température T et à humidité H, la vitesse de séchage est représentée par la longueur du segment $A_{(H, T)}$ Pe, Pe étant le point d'intersection de l'isohygre 0,9 avec l'isenthalpe passant par $A_{(H, T)}$. La forme des isohygres est telle que, quel que soit A, ce segment sera plus long, donc la vitesse plus grande, si T est grand et si H est grand à partir du moment où T est supérieure à 150°C.

D'autre part, si l'on fait le bilan enthalpique de l'opération de séchage thermique, on peut représenter par des courbes l'énergie dépensée par kg d'eau vaporisée en fonction de la teneur en humidité de l'air de séchage sortant, pour différentes températures d'air (figure 5), l'air entrant étant un air ambiant à température moyenne de 15°C et à humidité moyenne de 0,0065 kg d'eau par kg. On obtient un réseau d'hyperboles pour lesquelles l'énergie dépensée est d'autant plus basse que l'air sortant est plus concentré en vapeur d'eau, mais pour lesquelles également, quand on se déplace dans la région asymptotique de ces courbes, c'est-à-dire une humidité d'au moins 200 g et de préférence supérieure à 300 g de vapeur d'eau par kg d'air sec, l'énergie dépensée, quelles que soient les circonstances, varie très peu. Ainsi, il apparaît en comparant les conclusions données par le diagramme de Mollier-Ramzine et les courbes de bilan enthalpique que l'on a intérêt, économiquement parlant d'une part et lorsqu'on recherche une grande vitesse de séchage d'autre part, à choisir pour l'air du séchoir une température élevée et une humidité de sortie élevée. En tout état de cause, les performances deviennent intéressantes à partir du moment où T est supérieur à 150°C et où H de l'air sortant est supérieure à 200 g et de préférence supérieure à 300 g de vapeur d'eau par kg d'air sec et elles seront d'autant meilleures que H et dans une certaine mesure T seront plus élevées. Il est cependant une limite qu'il vaut mieux ne pas dépasser, c'est celle pour laquelle la déshydratation du dihydrate déjà formé l'emporte sur l'hydratation du $CaSO_4$ ou de l'hydrate intermédiaire. Avant le séchage par voie thermique, il a fallu peu de temps pour atteindre le taux d'hydratation permettant la manipulation (moins de 4 minutes); si en retirant l'eau excédentaire dans le séchoir, on fait régresser le taux d'hydratation, il faudra ensuite plusieurs jours pour rattraper le taux initial et pour pouvoir manipuler le panneau en plâtre fabriqué étant donné que toutes les actions préliminaires de filtration et d'essorage ont conduit à ralentir la fin de la réaction de prise du plâtre.

On veille donc par un contrôle de l'état d'hydratation des produits en plâtre en sortie du séchoir à ne pas choisir un couple H et T pour lequel le taux d'hydratation en sortie serait inférieur au taux d'hydratation à l'entrée. Par exemple, pour déterminer le taux d'hydratation d'un échantillon de produit en un plâtre de semi-hydrate, on utilise la méthode suivante: on bloque l'hydratation du $CaSO_4$ à l'alcool isopropylique, on laisse sécher l'échantillon dans une étuve à 60°C pendant un temps allant de 24 à 48 heures (jusqu'à un point constant). On le pèse, on le laisse séjourner à 400°C pendant 3 heures. On pèse à nouveau. Connaissant la perte au feu, on détermine la somme (hydrate transformé+hydrate non transformé) et le poids à 60°C permet de déterminer le quantité transformée.

Il est une limite qui semblait devoir être considérée dans le choix de H et T, c'est la limite donnée par le diagramme de stabilité des différents hydrates $CaSO_4$, $xH_2O$ en présence

d'air humide, établi à partir des constantes thermodynamiques. Un tel diagramme, montré figure 6, sur lequel la température est en abscisse et la pression de vapeur d'eau ou l'humidité relative en ordonnée, délimite pour $CaSO_4$ et ses hydrates les domaines de stabilité. Les courbes représentées correspondent à l'égalité de vitesse entre l'hydratation d'un corps en un corps plus hydraté et la déshydratation de ce même corps plus hydraté en celui moins hydraté. Il apparaît donc que pour ne pas avoir régression de l'hydratation, il faudrait soumettre les plaques à des airs dont le couple de caractéristiques (température, humidité) soit situé au-dessus de la courbe délimitant les deux domaines de stabilité de $CaSO_4$, $\frac{1}{2}H_2O$ et $CaSO_4$, $2H_2O$ ou à la limite sur cette courbe. En fait, ces conclusions ne sont valables qu'à l'équilibre, lorsque le temps de séjour dans ces conditions d'humidité et de température est long et que tout le produit est sous la forme de dihydrate.

Si le temps de séjour est court, inférieur à 10 minutes et préférentiellement de l'ordre de 3 à 4 minutes même avec un air de température élevée et à humidité faible, la déshydratation n'est pas sensible ou même l'hydratation se poursuit dans la mesure où de l'eau est toujours disponible. C'est le cas lorsqu'on soumet au séchage non pas du plâtre dont la prise est terminée, mais un produit hybride dont la prise n'est pas achevée et dans lequel il y a seulement quelques cristaux dans un excès d'eau. Ainsi, si on laisse séjourner une plaque de plâtre dans le séchoir à 200°C et avec une humidité d'air sortant de 50 g de vapeur d'eau par kg d'air, pendant 4 minutes, on constate que si ladite plaque était à son entrée hydratée à 55%, à sa sortie elle est hydratée à 80%. Donc même avec des conditions de température et humidité qui normalement, dans le cas de plâtre totalement hydraté, entraîneraient la décomposition de l'hydrate double formé en semi-hydrate, lorsque le temps de séjour est court et qu'il subsiste toujours de l'eau libre non combinée, non seulement la déshydratation ne se produit pas, mais encore l'hydratation se poursuit. A fortiori, lorsque, avec cette même température de 200°C, on choisira des conditions d'humidité plus favorables sur les plans de l'économie et de la rapidité de séchage, c'est-à-dire humidité égale à 200 ou même à 300 g/kg de vapeur d'eau, on n'aura pas à craindre la déshydratation pour des temps courts de séjour voisins de 4 minutes, et plus généralement des temps courts inférieurs à la dizaine de minutes.

Avec des rubans de produit d'épaisseur faible, en général inférieure à 10 mm et de préférence d'épaisseur d'environ 6 mm, on pourra choisir, avec encore moins de risques de dégradation du plâtre, des conditions sévères de séchage, ainsi par exemple T=200°C et H=300 g/kg.

Dans ces conditions, on peut obtenir une vitesse de séchage élevée de l'ordre de 20 à 50 kg et en moyenne de 25 kg d'eau vaporisée par heure et par m² de surface d'échange. Le temps de séjour dans le séchoir est alors de l'ordre de 4 minutes.

En pratique donc, on choisira un séchoir à haute efficacité apte à éliminer rapidement, c'est-à-dire dans un temps de l'ordre de 4 minutes, autant d'eau que la plâtre contient d'eau excédentaire.

Pour ce séchoir donné, on ajustera les conditions de fonctionnement, à savoir température et humidité de l'air sortant, pour obtenir en sortie un produit ne contenant plus qu'au maximum 5% et de préférence 1% d'eau excédentaire. On vérifiera qu'au cours du séchage thermique il n'y aura pas eu régression de l'hydratation. Avantageusement, on cherchera à concentrer en humidité l'air sortant pour avoir H supérieure à 200 g ou même égale à 300 g de vapeur d'eau par kg d'air, en limitant le débit d'air traversant.

La longueur de séchoir sera bonne et les conditions de fonctionnement économiquement intéressantes si, pour satisfaire les impératifs du séchage, on arrive à fonctionner à température élevée, supérieure à 150°C et de préférence de l'ordre de 200°C et à humidité supérieure à 200 g/kg et de préférence de l'ordre de 300 g/kg.

Un ruban de plâtre fabriqué comme il a été décrit peut être découpé en panneaux dès sa sortie du séchoir, puis emballé aussitôt. Il contient encore, en plus de la faible quantité d'eau excédentaire de l'ordre de 1%, l'eau nécessaire à la poursuite de son hydratation. Entré dans le séchoir avec un taux d'hydratation suffisant pour qu'il soit manipulable (au minimum de 20 à 50% selon le plâtre employé), séché dans des conditions qui empêchent la régression du taux d'hydratation, il est donc toujours manipulable en sortie du séchoir, bien que son hydratation ne soit pas terminée. Bien souvent même, malgré la température élevée, le taux d'hydratation aura légèrement progressé pendant le séchage et entré avec un taux minimum de 20 à 50% le produit en plâtre sortira du séchage avec un taux d'hydratation mimimum de 30 à 60% suivant le plâtre employé; donc sa tenue mécanique n'en sera que meilleure. On peut considérer qu'un produit hydraté aux alentours de 40 à 50% en sortie du séchoir, mais contenant l'eau nécessaire à la poursuite de son hydratation, est à peu près complètement hydraté au bout de 48 heures.

Grâce à l'invention, il faut un temps inférieur à 10 minutes compté à partir de la mise en contact de l'eau et du plâtre pulvérulent pour fabriquer et sécher des panneaux de plâtre et pour pouvoir en disposer, ou autrement dit, un temps inférieur à 9 minutes et généralement de l'ordre de 7 minutes pour éliminer l'eau excédentaire.

Le ruban en plâtre peut également être découpé en plaques avant l'entrée dans le séchoir.

Grâce au traitements préliminaires de filtration et d'essorage on obtient des produits en plâtre aux caractéristiques, notamment mécaniques et de tenue à l'eau améliorées.

Ainsi, un échantillon de plaque de plâtre dont on a éliminé l'eau excédentaire comme décrit précédemment n'absorbe, plongé dans une eau à 20°C pendant 48 heures, que 13% de sa masse initiale à sec.

Une plaque de plâtre dont on a éliminé l'eau excédentaire comme décrit précédemment présente une dureté SHORE C comprise entre 87 et 94 unités SHORE C; alors que non soumise aux traitements préalables de filtration et d'essorage, elle ne présente qu'une dureté SHORE C inférieure, de l'ordre de 84 à 87.

En éliminant l'eau excédentaire comme décrit précédernment on multiplie la masse spécifique du produit environ par 1,35. Les qualités mécaniques, notamment la résistance à la flexion sont nettement améliorées.

**Revendications**

1. Procédé d'élimination de l'eau excédentaire contenue dans des objets, notamment un ruban continu ou des plaques, obtenus après formage d'un mélange essentiellement de sulfate de calcium hydratable et d'eau en excès, caractérisé en ce qu'il comporte un séchage thermique commençant et se terminant avant la fin de l'hydratation du sulfate de calcium.

2. Procédé selon la revendication 1, caractérisé en ce qu'on interrompt le séchage thermique en laissant dans le produit au moins l'eau nécessaire à la poursuite de l'hydratation du sulfate de calcium.

3. Procédé selon la revendication 2, caractérisé en ce qu'à l'interruption de séchage thermique on laisse subsister dans le produit, en plus de l'eau d'hydratation, un maximum de 5% d'eau excédentaire et préférentiellement 1% d'eau excédentaire.

4. Procédé selon l'une quelconque des revendications précédentes, caractérisé en ce qu'on commence le séchage thermique après que les objets ont atteint un degré d'hydratation qui leur confère seulement suffisamment de tenue mécanique pour être manipulés.

5. Procédé selon la revendication 4, caractérisé en ce que le degré d'hydratation immédiatement avant le séchage thermique est de 20 à 50% selon la nature du plâtre.

6. Procédé selon l'une quelconque des revendications 4 ou 5, caractérisé en ce qu'on accélère la réaction d'hydratation du plâtre après le formage des objets, jusqu'à ce que soit atteint le degré d'hydratation à partir duquel lesdits objets sont manipulables.

7. Procédé selon la revendication 6, caractérisé en ce que pour accélérer le début de la réaction d'hydratation du plâtre on pratique les techniques suivantes prises seules ou en combinaison: extraction d'eau, adjonction de modulateurs de prise.

8. Procédé selon l'une quelconque des revendications 4 à 7, caractérisé en ce qu'on ralentit la réaction d'hydratation du plâtre après que le dégré d'hydratation conférant la tenue mécanique est atteint et ce au moins pendant le séchage thermique, notamment par extraction d'eau après le formage et avant le début du séchage thermique.

9. Procédé selon l'une quelconque des revendications 7 ou 8, caractérisé en ce que l'extraction d'eau est conduite de l'une des façons suivantes: filtration suivie d'un temps de développement de l'hydratation avant séchage thermique, filtration suivie d'un essorage jusqu'à atteindre un taux d'hydratation autorisant la manipulation, filtration suivie d'un essorage interrompu avant que soit atteint le taux d'hydratation autorisant la manipulation, lui même suivi d'un temps de développement de l'hydratation jusqu'au taux autorisant la manipulation.

10. Procédé selon la revendication 9, caractérisé en ce qu'on filtre et essore avec des dépressions inférieures à celles qui produiraient des fissurations dans le produit.

11. Procédé selon la revendication 10, caractérisé en ce que pour une couche de produit ayant immédiatement après formage une épaisseur jusqu'à environ 10 mm, la dépression de filtration est comprise entre 40 et 150 mm de mercure (5329 Pa et 19984 Pa) et de préférence égale à 100 (13322 Pa), et la dépression d'essorage est de l'ordre de 250 mm de mercure (33306 Pa).

12. Procédé selon l'une quelconque des revendications 9 à 11, caractérisé en ce qu'on poursuit l'essorage, jusqu'à ce que le débit d'eau extraite atteigne 5 à 10% du débit en début d'opération.

13. Procédé selon l'une quelconque des revendications précédentes, caractérisé en ce que le séchage thermique est à température élevée supérieure à 150°C, et de préférence de l'ordre de 200°C.

14. Procédé selon la revendication 13, caractérisé en ce que l'humidité de l'air de séchage sortant est supérieure à 200 g par kg d'air et de préférence égale à 300 g/kg.

15. Procédé selon l'une quelconque des revendications 13 ou 14, caractérisé en ce que le temps de séchage thermique est inférieur à la dizaine de minutes.

16. Procédé selon l'une quelconque des revendications 13 à 15, caractérisé en ce que le temps de séchage est voisin de 4 minutes.

17. Procédé selon l'une quelconque des revendications précédentes, caractérisé en ce que le taux d'hydratation du plâtre en sortie du séchage thermique est au moins égal au taux d'hydratation à l'entrée dudit séchage.

18. Procédé selon la revendication 17, caractérisé en ce que le dégré d'hydratation du plâtre en sortie du séchage thermique est au minimum de 30%.

19. Procédé selon la revendication 1 d'élimination de l'eau excédentaire contenue dans un produit en ruban continu ou en plaques obtenu après formage d'un mélange essentiellement de sulfate de calcium hydratable et d'eau en excès, ayant un rapport de mélange E/P supérieur à 0,80, présentant une épaisseur de l'ordre de la dizaine de mm, caractérisé en ce qu'on soumet le produit à une filtration de 20 à 80 secondes sous une dépression de 40 à 150 mm de mercure (5329 Pa à 19984 Pa) en ce qu'on l'essore ensuite pendant environ 1 minute sous une dépression de l'ordre de 250 mm de mercure (33306 Pa), en ce qu'on laisse se développer l'hydratation jusqu'à ce qu'il soit manipulable, en ce qu'on le soumet à un séchage thermique capable d'extraire de 20 à 50 kg et en moyenne 25 kg de vapeur d'eau par heure et par m² de surface d'échange jusqu'à élimination, à au maximum 5% près et de préférence 1% près, de l'eau excédentaire.

20. Procédé selon la revendication 1, d'élimination de l'eau excédentaire contenue dans un produit en ruban continu ou en plaques, obtenu après formage d'un mélange essentiellement de sulfate de calcium hydratable et d'eau en excès avec un rapport de mélange E/P de l'ordre de 0,80 ou 0,90, caractérisé en ce qu'on filtre jusqu'à atteindre un volume global du produit en plâtre correspondant à celui obtenu par un empilement des grains de plâtre, on essore jusqu'à atteindre un rapport E/P de l'ordre de 0,45 ou 0,50 et on laisse se développer l'hydratation du plâtre jusqu'à ce que le produit soit manipulable, on soumet au séchage thermique à une température élevée supérieure à 150°C et de l'ordre de 200°C jusqu'à élimination à au maximum 5% près et de préférence 1% de l'eau excédentaire, en réglant ledit séchage de façon à avoir une humidité élevée de l'air sortant dudit séchage, de préférence de l'ordre de 300 g par kg d'air.

21. Procédé selon les revendications 19 ou 20, caractérisé en ce qu'on interrompt le séchage thermique en laissant dans le produit, en plus des 5% maximum ou de préférence 1% d'eau excédentaire, l'eau nécessaire à la poursuite de l'hydratation.

22. Procédé d'élimination de l'eau excédentaire contenue dans un mélange de plâtre et d'eau en excès, caractérisé en ce qu'on élimine d'abord de l'eau par succion jusqu'à abaisser le rapport E/P à une valeur de l'ordre de 0,45 ou 0,50 pendant que le plâtre s'hydrate seulement jusqu'à une valeur autorisant sa manipulation, soit au minimum 20% de phase hydratée, et en ce qu'on soumet ensuite le produit ainsi obtenu à un séchage thermique qui conserve au moins le degré d'hydratation atteint, séchage thermique qu'on poursuit jusqu'à éliminer à au maximum 5% près et de préférence 1% près toute l'eau excédentaire du produit, n'y laissant subsister que l'eau nécessaire à la poursuite de l'hydratation.

23. Produit en plâtre, notamment un ruban continu ou des plaques, caractérisé en ce qu'en sortie d'un séchage thermique, le plâtre a une hydratation non terminée et en ce qu'il contient au moins l'eau nécessaire à la poursuite de l'hydratation.

24. Produit selon la revendication 23, caractérisé en ce qu'en plus de l'eau d'hydratation, il contient au maximum 5% et de préférence 1% d'eau excédentaire.

25. Produit selon l'une quelconque des revendications 23 ou 24, caractérisé en ce qu'en sortie du séchage thermique, il présente au minimum un taux d'hydratation du plâtre de l'ordre de 30%.

26. Dispositif pour éliminer l'eau excédentaire d'un produit en plàtre notamment un ruban continu ou des plaques, caractérisé en ce qu'il consiste en un filtre industriel et en un séchoir thermique qui fait suite au filtre industriel, traversés par des moyens supportant le produit, le séchoir thermique étant d'une longueur telle qu'il n'autorise le séjour des produits que pendant des temps inférieurs à la dizaine de minutes et de préférence de l'ordre de 4 minutes.

27. Dispositif selon la revendication 26, caractérisé en ce qu'il comporte un ou plusieurs convoyeurs se succédant, animés d'un mouvement continu de translation, d'une longueur totale telle qu'il(s) autorise(nt) un temps de séjour du produit sur le filtre et dans le séchoir, inférieur à la dizaine de minutes et de préférence voisin de 7 minutes.


## Patentansprüche

1. Verfahren zur Beseitigung von überschüssigem Wasser, das in Gegenständen, insbesondere einem fortlaufenden Band oder Platten, enthalten ist, die durch die Formung einer im wesentlichen aus hydratisierbarem Kalziumsulfat und überschüssigem Wasser bestehenden Mischung gewonnen werden, dadurch gekennzeichnet, daß es eine thermische Trocknung umfaßt, die vor dem Ende der Hydratation des Kalziumsulfats beginnt und endet.

2. Verfahren nach Anspruch 1, dadurch gekennzeichnet, daß die thermische Trocknung unterbrochen wird und in dem Produkt mindestens das zur Weiterführung der Hydratation des Kalziumsulfats erforderliche Wasser beläßt.

3. Verfahren nach Anspruch 2, dadurch gekennzeichnet, daß bei der Unterbrechung der thermischen Trocknung im Produkt neben dem Hydratationswasser höchstens 5% und vorzugsweise 1% überschüssiges Wasser zurückgelassen werden.

4. Verfahren nach einem der vorgehenden Ansprüche, dadurch gekennzeichnet, daß die thermische Trocknung begonnen wird, nachdem die Gegenstände einen Hydratationsgrad erreicht haben, der ihnen nur die zur Bearbeitung ausreichende mechanische Beständigkeit verleiht.

5. Verfahren nach Anspruch 4, dadurch gekennzeichnet, daß der Hydratationsgrad unmittelbar vor der thermischen Trocknung je nach der Art des Gipses 20 bis 50% beträgt.

6. Verfahren nach Anspruch 4 oder 5, dadurch gekennzeichnet, daß die Hydratationsreaktion des Gipses nach der Formung der Gegenstände solange beschleunigt wird, bis der Hydratationsgrad erreicht wird, von dem ab die besagtnen Gegenstände bearbeitbar sind.

7. Verfahren nach Anspruch 6, dadurch gekennzeichnet, daß zur Beschleunigung des Beginns der Hydratationsreaktion des Gipses folgende Techniken einzeln oder kombiniert verwendet werden: Wasserentzug, Zusatz von Modulatoren für den Festwerdungsprozeß.

8. Verfahren nach einem der Ansprüche 4 bis 7, dadurch gekennzeichnet, daß die Hydratationsreaktion des Gipses nach Erreichen des Hydratationsgrades, der die mechanische Beständigkeit verleiht, verlangsamt wird, und zwar mindestens während der thermischen Trocknung, insbesondere durch Wasserentzug nach der Formung und vor dem Beginn der thermischen Trocknung.

9. Verfahren nach Anspruch 7 oder 8, dadurch gekennzeichnet, daß der Wasserentzug auf eine der folgenden Arten vorgenommen wird: Filtration, gefolgt von einer Entwicklungszeit für die Hydratation vor der thermischen Trocknung, Filtration, gefolgt von einer Trocknung bis zum Erreichen des zur Bearbeitung erforderlichen Hydratationsgrades, Filtration, gefolgt von einer unterbrochenen Trocknung, bevor der zur Bearbeitung erforderliche Hydratationsgrad erreicht ist, die danach gefolgt wird von einer Entwicklungszeit für die Hydratation bis zum Erreichen des zur Bearbeitung erforderlichen Grades.

10. Verfahren nach Anspruch 9, dadurch gekennzeichnet, daß bei Unterdrücken gefiltert und getrocknet wird, die niedriger sind als die, welche im Produkt zur Rißbildung führen würden.

11. Verfahren nach Anspruch 10, dadurch gekennzeichnet, daß der Filtrationsunterdruck für eine Produktschicht, die direkt nach der Formung eine Dicke bis etwa 10 mm aufweist, zwischen 40 und 150 mm Hg (5329 Pa und 19984 Pa) liegt und vorzugsweise gleich 100 mm Hg (13322 Pa) beträgt und der Unterdruck der Trocknung etwa 250 mm Hg (33306 Pa) beträgt.

12. Verfahren nach einem der Ansprüche 9 bis 11, dadurch gekennzeichnet, daß die Trocknung solange weitergeführt wird, bis die Menge des entzogenen Wassers 5 bis 10% der Menge zu Beginn des Verfahrens beträgt.

13. Verfahren nach einem der vorgehenden Ansprüche, dadurch gekennzeichnet, daß die thermische Trocknung bei einer Temperatur über 150°C vorgenommen wird, vorzugsweise etwa bei 200°C.

14. Verfahren nach Anspruch 13, dadurch gekennzeichnet, daß die Feuchtigkeit der austretenden Trockenluft über 200 g je kg Luft beträgt und vorzugsweise gleich 300 g/kg ist.

15. Verfahren nach Anspruch 13 oder 14, dadurch gekennzeichnet, daß die Zeit der thermischen Trocknung weniger als 10 Minuten beträgt.

16. Verfahren nach einem der Ansprüche 13 bis 15, dadurch gekennzeichnet, daß die Trockenzeit etwa 4 Minuten beträgt.

17. Verfahren nach einem der vorhergehenden Ansprüche, dadurch gekennzeichnet, daß der Hydratationsgrad des Gipses am Ausgang der thermischen Trocknung mindestens gleich dem Hydratationsgrad am Eingang der besagten Trocknung ist.

18. Verfahren nach Anspruch 17, dadurch gekennzeichnet, daß der Hydratationsgrad des Gipses am Ausgang der thermischen Trocknung mindestens 30% beträgt.

19. Verfahren nach Anspruch 1 zur Beseitigung von überschüssigem Wasser, das in einem aus einem fortlaufenden Band oder aus Platten bestehenden Produkt enthalten ist, das nach Formung einer im wesentlichen aus hydratisierbarem Kalziumsulfat und überschüssigem Wasser zusammengesetzten Mischung gewonnen wird, ein Mischungsverhältnis Wasser/Gips von über 0,80 aufweist und eine Dicke von etwa 10 mm besitzt, dadurch gekennzeichnet, daß das Produkt einer Filtration von 20 bis 80 Sekunden Dauer bei einem Unterdruck von 40 bis 150 mm Hg (5329 Pa bis 19984 Pa) ausgesetzt wird, daß anschließend das Produkt etwa 1 Minute lang bei einem Unterdruck von etwa 250 mm Hg (33306 Pa) getrocknet wird, daß die Hydratation sich solange entwickeln kann, bis das Produkt bearbeitbar ist und daß das Produkt einer thermischen Trocknung unterzogen wird, die 20 bis 50 kg und durchschnittlich 25 kg Wasserdampf je Stunde und m² Austauschfläche entzeihen kann bis zur Beseitigung von einem Restwasser von höchstens etwa 5% und vorzugsweise von etwa 1% des Überschußwassers.

20. Verfahren nach Anspruch 1 zur Beseitigung von überschüssigem Wasser, das in einem aus einem fortlaufenden Band oder aus Platten bestehenden Produkt enthalten ist, das nach Formung einer im wesentlichen aus hydratisierbarem Kalziumsulfat und überschüssigem Wasser zusammengesetzten Mischung gewonnen wird und ein Mischungsverhältnis Wasser/Gips von etwa 0,80 oder 0,90 aufweist, dadurch gekennzeichnet, daß bis zum Erreichen eines Gesamtvolumens des Gipsproduktes, das dem bei einer Schichtung der Gipskörner erzielten entspricht, gefiltert wird, daß bis zum Erreichen eines Verhältnisses Wasser/Gips von etwa 0,45 oder 0,50 getrocknet wird, daß die Gipshydratation sich solange entwickeln kann, bis das Produkt bearbeitet ist und daß das Produkt bei einer Temperatur über 150°C, und zwar von etwa über 200°C einer thermischen Trocknung ausgesetzt wird bis zur Beseitigung von einer Restwassermenge von höchstens etwa 5% und vorzugsweise von 1% des Überschußwassers, indem die besagte Trocknung derart geregelt wird, daß die aus der besagten Trocknung ausströmende Luft eine hohe Feuchtigkeit, vorzugsweise etwa 300 g je kg Luft, aufweist.

21. Verfahren nach Anspruch 19 oder 20, dadurch gekennzeichnet, daß man die thermische Trocknung unterbricht und dabei in dem Produkt außer dem maximalen 5% oder vorzugsweise 1% des Überschußwassers noch das erforderliche Wasser für die Weiterführung der Hydratation beläßt.

22. Verfahren zur Beseitigung von überschüssigem Wasser, das in einer Mischung aus Gips und überschüssigen Wasser enthalten, ist, dadurch gekennzeichnet, daß zuerst durch Absaugen Wasser beseitigt wird, bis das Verhältnis Wasser/Gips auf einen Wert von etwa 0,45 oder 0,50 gesenkt ist, während sich der Gips nur bis zu einem Wert hydratisiert, der seine Bearbeitung erlaubt, d.h. im Minimum 20% der wässerigen Phase, und dadurch, daß das so gewonnene Produkt einer thermischen Trocknung unterzogen wird, die mindestens den erreichten Hydratationsgrad beibehält und die fortgesetzt wird bis auf höchstens etwa 5% und vorzugsweise etwa 1% des gesamten Überschußwassers des Produktes und das nur zur Fortsetzung der Hydratation erforderlichen Wassers.

23. Gipsprodukt, insbesondere ein fortlaufendes Band oder Platten, dadurch gekennzeichnet, daß der Gips am Ausgang einer thermischen Trocknung eine nicht beendete Hydratation aufweist und daß er mindestens das für die Fortsetzung der Hydratation erforderliche Wasser enthält.

24. Produkt nach Anspruch 23, dadurch gekennzeichnet, daß es neben dem Hydratationswasser im Maximim 5% und vorzugsweise 1% überschüssiges Wasser enthält.

25. Produkt nach Anspruch 23 oder 24, dadurch gekennzeichnet, daß der Gips am Ausgang der thermischen Trocknung mindestens einen Hydratationsgrad von etwa 30% aufweist.

26. Vorrichtung zur Beseitigung von überschüssigem Wässer aus einem Gipsprodukt, insbesondere einem fortlaufenden Band oder Platten, dadurch gekennzeichnet, daß sie aus einem Industriefilter und einem nachgeschalteten thermischen Trockner besteht, über welchen Mittel angeordnet sind, die das Produkt tragen, wobei der thermische Trockner eine solche Länge aufweist, die den Aufenthalt der Produkte im Trockner nur während einer Zeit unter zehn Minuten und vorzugsweise etwa vier Minuten erlaubt.

27. Vorrichtung nach Anspruch 26, dadurch gekennzeichnet, daß sie ein oder mehrere aufeinanderfolgende Förderbänder umfaßt, das (die) durch eine stetige Schubbewegung bewegt wird (werden), dessen (deren) Gesamtlänge derart ist, daß sie eine Aufenthaltszeit des Produktes auf dem Filter und im Trockner von unter zehn Minuten und vorzugsweise etwa 7 Minuten erlaubt.

## Claims

1. Process for the elimination of excess water present in objects, particularly a continuous strip or plates, obtained after forming a mixture essentially consisting of hydratable calcium sulphate and excess water, characterised in that it comprises heat drying starting and ending before the end of the hydration of the calcium sulphate.

2. Process according to Claim 1, characterised in that heat drying is interrupted, leaving in the product at least the water necessary for continuing the hydration of the calcium sulphate.

3. Process according to Claim 2, characterised in that, on the interruption of heat drying, one allows a maximum of 5% excess water and preferably 1% excess water to remain in the product in addition to the hydration water.

4. Process according to any one of the foregoing claims characterised in that heat drying is begun after the objects have reached a degree of hydration which gives them only enough mechanical hold to be handled.

5. Process according to Claim 4, characterised in that the degree of hydration immediately before heat drying is from 20 to 50%, depending on the nature of the plaster.

6. Process according to any one of Claims 4 or 5, characterised in that the hydration reaction of the plaster after the forming of the objects is speeded up until the degree of hydration is reached starting from which said objects can be handled.

7. Process according to Claim 6, characterised in that, in order to  speed up the commencement of the plaster hydration reaction, the following techniques are carried out individually or in combination:— extraction of water, addition of setting modulators.

8. Process according to any one of Claims 4 to 7, characterised in that the hydration reaction of the plaster is slowed down after the degree of hydration imparting the mechanical hold has been reached, this being performed at least during heat drying, particularly through the extraction of water after forming and before the commencement of heat drying.

9. Process according to any one of Claims 7 or 8, characterised in that the extraction of water is performed in one of the following ways: filtration followed by a period of hydration development before heat drying, filtration followed by drying until a hydration rate is reached which permits of handling, filtration followed by drying interrupted before the hydration rate permitting handling is reached, this being followed by a period of development of hydration up to the rate permitting handling.

10. Process according to Claim 9, characterised in that filtration and drying are performed with reduced pressures below those which would produce cracks in the product.

11. Process according to Claim 10, characterised in that, for a layer of product having immediately after forming a thickness of up to about 10 mm, the filtration reduced pressure is comprised between 40 and 150 mm Hg (5329 Pa and 19984 Pa) and preferably equal to 100 (13322 Pa), and the drying reduced pressure is of the order of 250 mm Hg (33306 Pa).

12. Process according to any one of Claims 9 to 11, characterised in that drying is continued until the flow of water extracted reaches 5 to 10% of the rate of flow at the start of the operation.

13. Process according to any one of the foregoing claims, characterised in that the heat drying is at a high temperature above 150°C, and preferably of the order of 200°C.

14. Process according to Claim 13, characterised in that the humidity of the outflowing drying air is greater than 200 g per kilo of air and preferably equal to 300 g/kg.

15. Process according to either of Claims 13 or 14, characterised in that the heat drying time is less than ten minutes.

16. Process according to any one of Claims 13 to 15, characterised in that drying time is close to 4 minutes.

17. Process according to any one of the foregoing claims, characterised in that the rate of hydration of the plaster on issuing from heat drying is at least equal to the hydration rate at the commencement of said drying.

18. Process according to Claim 17, characterised in that the hydration degree of the plaster on issuing from heat drying is at least 30%.

19. Process according to Claim 1 for the elimination of excess water contained in a product in the form of a continuous strip or plates obtained after forming of a mixture consisting essentially in hydratable calcium sulphate and excess water, with a W/P mixture ratio in excess of 0.80, having a thickness of the order of ten mm, characterised in that the product is subjected to filtration for 20 to 80 seconds at a reduced pressure of 40 to 150 mm Hg (5329 Pa to 19984 Pa), in that it is subsequently dried for about 1 minute at a reduced pressure of the order of 250 mm Hg (33306 Pa), in that hydration is allowed to develop until the product can be handled, in that the product is subjected to heat drying able to extract 20 to 50 kg and on an average 25 kg steam per hour and per square metre of exchange area until elimination to the nearest 5%, as a maximum, and preferably to the nearest 1% of excess water.

20. Process according to Claim 1 for the elimination of excess water contained in a product in the form of a continuous strip or plates obtained after forming of a mixture consisting essentially in hydratable calcium sulphate and excess water, with a W/P mixture ratio of the order of 0.80 or 0.90 characterised in that filtration is performed until an overall volume of the product of plaster is reached corresponding to that obtained by a stacking of the plaster granules, drying is performed until a W/P ratio of the order of 0.45 or 0.50 is obtained, and hydration of the plaster is allowed to develop until the product is handlable, heat drying is applied at a high temperature in excess of 150°C and of the order of 200°C until elimination to the nearest 5%, as a maximum, and preferably to the nearest 1% of the excess water, adjusting said drying so as to obtain a high humidity of the air issuing from said drying, preferably of the order of 300 g per kilo of air.

21. Process according to Claims 19 or 20, characterised in that heat drying is interrupted while leaving in the product, in addition of the 5% maximum or preferably 1% excess water, the water necessary for the continuance of hydration.

22. Process for the elimination of excess water present in a mixture of plaster and excess water, characterised in that water is first eliminated by suction until the W/P ratio is reduced to a value of the order of 0.45 or 0.50 while the plaster becomes hydrated only to a value enabling it to be handled, i.e. a minimum of 20% hydrated phase, and in that the product thus obtained is subject to heat drying which retains at least the degree of hydration reached, said heat drying being continued until a maximum of 5% and preferably to within 1% of the whole of the excess water of the product, allowing only the water necessary for continuance of hydration to remain.

23. Plaster product, particularly a continuous strip or plates, characterised in that on issuing from heat drying the plaster exhibits a hydration which has not ended, and in that it contains at least the water necessary for the continuance of hydration.

24. Product according to Claim 23, characterised in that in addition to hydration water it contains a maximum of 5% and preferably 1% excess water.

25. Product according to either of Claims 23 or 24, characterised in that on issuing from heat drying it has at least a plaster hydration rate of the order of 30%.

26. Apparatus for eliminating the excess water from a plaster product particularly in the form of a continuous strip or plates, characterised in that it consists in an industrial filter and in a heat dryer following the industrial filter, means supporting the product passing through filter and dryer, the heat dryer being of a length such as to allow the products to stay only for periods of less than about 10 minutes and preferably of the order of 4 minutes.

27. Apparatus according to Claim 26, characterised in that it comprises one or more conveyors in succession with continuous translation movement, of a total length such as to permit a time of stay of the product on the filter and in the dryer below ten or so minutes and preferably close to 7 minutes.

Fig. 1

**3**

**2**

**1**

**5**

**4**

**6**

**7**

**14**

**8**

**A**

**B**

**13**

**Filtration**  **Essorage**  **Séchage**

**12**  **9**  **10**  **11**

**Vide**  **Vide**

0 042 349

**Fig. 2**

**Fig. 3**

**Fig. 5**

Energie dépensée kcal/kg

Air entrant : 0,0065 kg d'eau par kg à 15 °C

Température de l'air sortant

1000

750

500

175 °C
150
125
100

0,1  0,2  0,3  0,4  0,5  0,6  0,7

Humidite d'air sortant en kg de vapeur d'eau par kg d'air

**Fig. 4**

Enthalpie

Température sèche

(A)

T
150
100

$\varphi = 0,9$
$\varphi = 1$

Pe

H

Humidité absolue

Pression vapeur eau

$CaSO_4$
$2H_2O$

3
2
1
0

mm mercure

$CaSO_4$
$1/2H_2O$

$CaSO_4$

**Fig. 6**

0   50   100   150   200

Temperature

°C

0 042 349